Europäisches Patentamt

European Patent Office

Office européen des brevets

(11) Veröffentlichungsnummer: **0 253 957 B1**

(19)

(12) **EUROPÄISCHE PATENTSCHRIFT**

(45) Veröffentlichungstag der Patentschrift: **27.11.91**

(51) Int. Cl.5: **C04B 35/66**, C04B 35/04

(21) Anmeldenummer: **87105484.7**

(22) Anmeldetag: **14.04.87**

(54) **Feuerfeste, spritzfähige Massen oder feuerfeste ungebrannte Formkörper auf MgO-Basis.**

(30) Priorität: **24.07.86 DE 3625064**
**03.02.87 DE 3703136**

(43) Veröffentlichungstag der Anmeldung:
**27.01.88 Patentblatt 88/04**

(45) Bekanntmachung des Hinweises auf die
Patenterteilung:
**27.11.91 Patentblatt 91/48**

(84) Benannte Vertragsstaaten:
**AT BE CH DE ES FR GB IT LI LU NL SE**

(56) Entgegenhaltungen:
**EP-A- 0 037 165**
**EP-A- 0 042 897**
**US-A- 4 001 029**

(73) Patentinhaber: **DIDIER-WERKE AG**
**Lessingstrasse 16-18**
**W-6200 Wiesbaden(DE)**

(72) Erfinder: **Hlawatschek, Hartmut, Dr.**
**Michael-Müller-Ring 4**
**W-6500 Mainz(DE)**

(74) Vertreter: **Brückner, Raimund, Dipl.-Ing.**
**c/o Didier-Werke AG Lessingstrasse 16-18**
**W-6200 Wiesbaden(DE)**

EP 0 253 957 B1

## Beschreibung

Die Erfindung betrifft feuerfeste, spritzfähige Massen oder feuerfeste, ungebrannte Formkörper, welche als hauptsächlichen Feuerfestbestandteil Sintermagnesit und/oder Sinterdolomit, 0,5 bis 5 Gew.-% Bentonit, 1 bis 5 Gew.-% Aluminiumsulfat und 0,5 bis 5 Gew.-% einer Erdalkaliverbindung sowie gegebenenfalls geringe Anteile an Wasser enthalten.

Aus der DE-PS 24 57 579 sind feuerfeste Massen auf MgO-Basis bekannt, welche als Bindemittel eine organische Säure wie Zitronensäure, Aluminiumsulfat und gegebenenfalls eine Borverbindung wie Natriumborat oder Borax enthalten. Solche Massen können als Spritzmassen zur Herstellung von feuerfesten Beschichtungen und Auskleidungen verwendet werden. Weiterhin sind aus der DE-PS 26 17 587 feuerfeste Massen auf MgO-Basis bekannt, welche ein Erdalkalisulfat und Aluminiumsulfat, gelöschten Kalk und Bentonit enthalten. Bei diesen vorbekannten Massen, welche als Spritzmassen eingesetzt werden können, dienen das Aluminiumsulfat und der gelöschte Kalk, d.h. Ca(OH)$_2$, als Bindemittel, welche ein schnelles Abbinden beim Aufspritzen selbst auf heiße Flächen ergeben sollen und von solchen heißen Flächen nicht abplatzen. In dieser DE-PS 26 17 587 ist auch bereits die gemeinsame Verwendung von Periklas, d.h. Sintermagnesit und Chromerz angegeben.

Es wurde nun gefunden, daß bei Verwendung von MgO-Kauster, d.h. einem Magnesiumoxid, MgO, das noch nicht totgebrannt ist, sondern mit Wasser eine alkalische Suspension bildet, und/oder von Magnesiumhydroxid, d.h. Mg(OH)$_2$, ebenfalls feuerfeste spritzfähige Massen erhalten werden können, wobei bei den erfindungsgemäßen Massen keine Bindemittelmigration wie bei den aus der genannten DE-PS 26 17 587 bekannten Massen auftritt. Weiterhin wurde gefunden, daß die erfindungsgemäßen Massen beim Aufspritzen in Schichtstärken von mehr als 10 cm und mit Schichtstärken bis zu oberhalb 20 cm aufgetragen werden können, wobei keine Entdampfungsrisse oder Abplatzungen auftreten, weiterhin, daß die Feuerfestigkeit durch Fehlen eines Kalziumbestandteiles erhöht wird. Weiterhin wurde gefunden, daß aus den erfindungsgemäßen Massen in einfacher Weise durch Zusatz der geeigneten Menge Wasser eine Mischung hergestellt werden kann, welche zu ungebrannten Formkörpern, d.h. Grünlingen, verformt werden kann, welche formstabil sind, wobei solche grünen Formkörper zu feuerfesten Auskleidungen zusammengesetzt und dann bei der Benutzung verfestigt werden, d.h. gebrannt werden.

Die erfindungsgemäßen Massen bzw. Formkörper enthalten als hauptsächlichen Feuerfestbestandteil Sintermagnesit und/oder Sinterdolomit, welche handelsübliche Produkte darstellen. Weiterhin enthalten die erfindungsgemäßen Massen noch 0,5 bis 5 Gew.-% und vorzugsweise 0,5 bis 2,0 Gew.-% Bentonit. Gemäß einer bevorzugten Ausführungsform enthalten die erfindungsgemäßen Massen neben dem Bentonit noch 0,5 bis 4 Gew.-%, bezogen auf die Gesamtmenge der Festbestandteile, an normalem, relativ wenig quellenden feuerfesten Ton. Der Vorteil dieser Ausführungsform liegt darin, daß bei Massen mit einem höheren Bentonitgehalt, d.h. bei Massen mit etwas mehr als 2,0 Gew.-% Bentonit die Fähigkeit zum Spritzen der Massen herabgesetzt wird, weiterhin, daß das Vermischen der Massen mit Wasser in der Spritzlanze bei höheren Bentonitgehalten nicht so günstig verläuft. Bei Verwendung von Bentonit im unteren Teil des angegebenen Bereiches von 0,5 bis 5 Gew.-% und Mitverwendung von Ton wird sowohl die Verspritzbarkeit als auch die Mischung der Masse mit Wasser erleichtert.

Gemäß einer weiteren bevorzugten Ausführungsform können bei den erfindungsgemäßen Massen bis zu 40 Gew.-% des Sintermagnesits und/oder Sinterdolomits durch Chromerz ersetzt werden. Diese Ausführungsform ist vorteilhaft, wenn für bestimmte Anwendungszwecke bzw. Stahlsorten bzw. Schlacken eine bessere Standzeit der Massen, d.h. ein geringerer Abtrag oder ein geringeres Eindringen von Stahl oder Schlacken bei der Anwendung der Massen erreicht werden soll.

Die erfindungsgemäßen Massen und Formkörper werden insbesondere zur Herstellung von Auskleidungen von Elektroöfen eingesetzt.

Als eines der Bindemittel enthalten die erfindungsgemäßen Massen in an sich bekannter Weise Aluminiumsulfat in Mengen von 1 bis 5 Gew.-% und bevorzugt von 2 bis 4 Gew.-%, wobei dieses Aluminiumsulfat als wasserfreies Al$_2$(SO$_4$)$_3$ berechnet wird.

Als Gegebenenfalls-Bestandteil können die erfindungsgemäßen Massen bis zu 3 Gew.-% und vorzugsweise bis zu 2 Gew.-% an Magnesiumsulfat enthalten, wobei dieses Magnesiumsulfat ebenfalls als wasserfreies MgSO$_4$ berechnet wird.

Der bei den erfindungsgemäßen Massen oder Formkörpern eingesetzte Kauster ist ebenfalls ein handelsübliches Produkt, das durch Brennen bei niedrigeren Temperaturen, z.B. bis 1000 °C, von Mg-(OH)$_2$ als Meerwasserkauster oder durch Brennen von natürlich vorkommendem Magnesit als Naturkauster gewonnen wird. Als solcher MgO-Kauster kann auch der Flugstaub aus Sinteröfen, der noch kaustische Anteile enthält, verwendet werden.

Aus den angegebenen Bestandteilen wird zur Herstellung von spritzfähigen Massen eine sogenannte

2

Trockenmischung hergestellt, die dann am Ort der Anwendung mittels einer Spritzlanze aufgetragen wird, wobei das Vermischen mit den erforderlichen Wassermengen in der Spritzlanze erfolgt. Übliche Wassermengen betragen hierbei 8 bis 20 Gew.-%, bezogen auf die Trockenmischung. Eine solche Trockenmischung kann jedoch auch mit geringeren Wassermengen zwischen 4 und 8 Gew.-%, bezogen auf die Trockenmischung, in einem Mischer vermischt werden und dann zu Grünlingen, d.h. Formkörpern verformt werden, z.B. durch isostatisches Pressen in geeigneten Formen. Diese Formkörper können dann gegebenenfalls noch getrocknet werden, z.B. bei Temperaturen bis zu 150 °C, das Trocknen kann jedoch auch durch Lagerung an der Luft erfolgen. Solche Formkörper besitzen eine relativ hohe Formstabilität und mechanische Festigkeit, so daß sie ohne weiteres auf Paletten zum Versand gebracht werden können.

Die erfindungsgemäßen Massen oder Formkörper können statt des MgO-Kausters auch Magnesiumhydroxid enthalten, wie es bei der Herstellung von Meerwasserkauster als Zwischenprodukt anfällt. Mischungen von MgO-Kauster und Magnesiumhydroxid können ebenfalls verwendet werden.

Die Feuerfestmaterialien werden in den üblichen Korngrößen verwendet, z.B. mit einer maximalen Korngröße von 6 mm, vorteilhafterweise 4 mm und bevorzugt 2 mm.

Die Erfindung wird anhand der folgenden Beispiele näher erläutert:

Beispiel 1

Es wurde eine Trockenmischung aus folgenden Bestandteilen hergestellt:

|  | Gew.-% |
|---|---|
| Sintermagnesit 0 - 3 mm Korngröße | 74,4 |
| Meerwassersinter 0 - 2 mm Korngröße | 22,3 |
| MgO-Kauster | 0,7 |
| $Al_2(SO_4)_3$ | 1,9 |
| Bentonit | 0,7 |

Diese Trockenmischung wurde mit 12 Gew.-Teilen Wasser, bezogen auf 100 Gew.-Teile der Trockenmischung, in einer Spritzlanze gemischt und konnte mit einer Schichtstärke von $\geq$ 10 cm auf einer senkrechten Wand eines Elektroofens bei kontinuierlichem Auftrag aufgebracht werden.

Beispiel 2

Es wurde eine Trockenmischung aus folgenden Bestandteilen hergestellt:

|  | Gew.-% |
|---|---|
| Meerwassersinter 0 - 2 mm Korngröße | 92,1 |
| MgO-Kauster | 2,6 |
| $Al_2(SO_4)_3$ | 2,0 |
| Bentonit | 1,3 |
| feuerfester Ton | 1,3 |
| $MgSO_4$ | 0,7 |

Diese Trockenmischung konnte ebenfalls mit einer Spritzdicke von $\geq$ 10 cm aufgetragen werden.

Die gleiche Trockenmischung wurde mit 6 Gew.-Teilen Wasser, bezogen auf 100 Gew.-Teile der Trockenmischung in einem Mischer vermischt und auf einer isostatischen Presse zu Formkörpern mit den Abmessungen 250 x 125 x 65 mm bei einem Druck von 100 N/mm² verpreßt. Diese Formkörper wurden bei 130 °C getrocknet und konnten dann auf einer Palette zum Transport gestapelt werden.

Beispiel 3

Es wurde zunächst eine Trockenmischung aus folgenden Bestandteilen hergestellt:

| | Gew.-% |
|---|---|
| Sinterdolomit 0 - 2 mm Korngröße | 66 |
| Chromerz (Transvaal) 0 - 2 mm Korngröße | 24 |
| MgO-Kauster | 4,0 |
| $Al_2(SO_4)_3$ | 3,5 |
| Bentonit | 0,5 |
| feuerfester Ton | 2,0 |

Die Trockenmischung konnte mit 13 Gew.-Teilen Wasser, bezogen auf 100 Gew.-Teile der Trockenmischung als Spritzmasse aufgetragen werden.

**Patentansprüche**

1. Feuerfeste, spritzfähige Massen oder feuerfeste, ungebrannte Formkörper, enthaltend Sintermagnesit und/oder Sinterdolomit als hauptsächlichen Feuerfestbestandteil, 0,5 bis 5 Gew.-% Bentonit, 1 bis 5 Gew.-% Aluminiumsulfat und O,5 bis 5 Gew.-% einer Erdalkaliverbindung, dadurch gekennzeichnet, daß sie als Erdalkaliverbindung MgO-Kauster und/oder Magnesiumhydroxid enthalten.

2. Massen oder Formkörper nach Anspruch 1, dadurch gekennzeichnet, daß bis zu 4O Gew.-% des Sintermagnesits und/oder Sinterdolomits durch Chromerz ersetzt sind.

3. Massen oder Formkörper nach Anspruch 1, dadurch gekennzeichnet, daß sie neben dem Bentonit noch O,5 bis 4 Gew.-% Ton enthalten.

4. Massen oder Formkörper nach Anspruch 1, dadurch gekennzeichnet, daß sie neben dem Aluminiumsulfat noch bis zu 3 Gew.-% Magnesiumsulfat enthalten.

**Claims**

1. Sprayable refractory compositions or unfired refractory shaped bodies containing sintered magnesite and/or sintered dolomite as the main refractory component, 0.5 to 5 wt.% bentonite, 1 to 5 wt.% aluminium sulphate and 0.5 to 5 wt.% of an alkaline earth compound, characterised in that they contain caustic MgO and/or magnesium hydroxide as the alkaline earth compound.

2. Compositions or shaped bodies as claimed in Claim 1, characterised in that up to 40 wt.% of the sintered magnesite and/or sintered dolomite is replaced by chromium ore.

3. Compositions or shaped bodies as claimed in Claim 1, characterised in that they also contain 0.5 to 4 wt.% clay in addition to the bentonite.

4. Compositions or shaped bodies as claimed in Claim 1, characterised in that they also contain up to 3 wt.% magnesium sulphate in addition to the aluminium sulphate.

**Revendications**

1. Masses réfractaires projetables ou corps moulés réfractaires non cuits, contenant de la magnésite frittée et/ou de la dolomite frittée comme principal composant réfractaire, 0,5 à 5 % en poids de bentonite, 1 à 5 % en poids de sulfate d'aluminium et 0,5 à 5 % en poids d'un composé alcalino-terreux, caractérisés en ce qu'ils contiennent, comme composé alcalino-terreux, un dégourdi de MgO et/ou de l'hydroxyde de magnésium.

2. Masses ou corps moulés selon la revendication 1, caractérisés en ce qu'on remplace jusqu'à 40 % en poids de la magnésite frittée et/ou de la dolomite frittée par du minerai de chrome.

3. Masses ou corps moulés selon la revendication 1, caractérisés en ce qu'il contiennent aussi 0,5 à 4 % en poids d'argile, en plus de la bentonite.

4

4. Masses ou corps moulés selon la revendication 1, caractérisés en ce qu'ils contiennent aussi jusqu'à 3 % en poids de sulfate de magnésium, en plus du sulfate d'aluminium.